Europäisches Patentamt

European Patent Office

Office européen des brevets

(19)

(11) Veröffentlichungsnummer : **0 069 044**
**B1**

(12) **EUROPÄISCHE PATENTSCHRIFT**

(45) Veröffentlichungstag der Patentschrift :
28.08.85

(51) Int. Cl.⁴ : **H 02 P   1/46**

(21) Anmeldenummer : 82730070.8

(22) Anmeldetag : 27.05.82

(54) Elektrischer Stromrichtermotor synchroner Bauart.

(30) Priorität : 26.06.81 DE 3126318

(43) Veröffentlichungstag der Anmeldung :
05.01.83 Patentblatt 83/01

(45) Bekanntmachung des Hinweises auf die Patenterteilung : 28.08.85 Patentblatt 85/35

(84) Benannte Vertragsstaaten :
AT CH DE FR LI SE

(56) Entgegenhaltungen :
CH-A-   237 862
CH-A-   404 797
US-A- 1 937 371
IEE PROCEEDINGS-B, Band 127, Nr. 6, November
1980, Seiten 375-381, Surrey, G.B. A.C. WILLIAMSON
et al.: "New method of low-speed commutation of an
inverter-fed synchronous motor"
BROWN BOVERI MITTEILUNGEN, Band 51, Nr. 8/9,
August/September 1964, Seiten 526-530, Baden, CH.
H.G. MEYER: "Statische Frequenzwandler für das
Anwerfen von Synchronmaschinen"

(73) Patentinhaber : **Siemens Aktiengesellschaft**
**Berlin und München Wittelsbacherplatz 2**
**D-8000 München 2 (DE)**

(72) Erfinder : **V. Musil, Rudolf, Dipl.-Ing.**
**Bredowstrasse 12**
**D-1000 Berlin 21 (DE)**

## Beschreibung

Die Erfindung bezieht sich auf einen elektrischen Stromrichtermotor synchroner Bauart, dessen drei Stränge der Ständerwicklung über einen Umrichter mit dem Netz verbunden sind und dessen Läufererregerwicklung bei laufenden Motor aus einer Gleichstromquelle gespeist ist. Derartige Stromrichtermotoren sind bekannt und z. B. im Buch der Siemens Aktiengesellschaft von Erich Eder « Stromrichter zur Drehzahlsteuerung von Drehfeldmaschinen (Industrieelektronik) », Teil 4 « Der Stromrichtermotor » insbesondere auf Seite 20 beschrieben. Derartige Stromrichtermotoren haben den Vorteil, daß sie in ihrer Drehzahl wie eine Gleichstrommaschine regelbar sind und trotzdem den einfachen Aufbau einer Synchronmaschine aufweisen. Es können dabei die verschiedenen bekannten Umrichterarten zwischen das Netz und die Maschine geschaltet sein, z. B. Direktumrichter oder Umrichter mit Gleichstromzwischenkreis. Geeignete Steuermittel bewirken das gewünschte Betriebsverhalten der Maschine.

Weiterhin ist aus der CH-PS 23 78 62 ein Anlaßverfahren für einen elektrischen Synchronmotor bekannt, dessen Ständerwicklung im Betrieb an ein Drehstromnetz angeschlossen und dessen Läuferwicklung aus einer Gleichstromquelle gespeist ist. Nur zu Beginn des Anlaßvorganges — am Ende des Stillstandes — sind alle drei Stränge der Ständerwicklung über einen Umrichter mit dem Netz verbunden, wobei der Umrichter die Ständerwicklung mit einer Gleichspannung speist. Diese nur sehr kurzzeitige Lieferung einer Gleichspannung erfolgt, damit der Synchronmotor beim Anlassen ein ausreichendes Drehmoment entwickelt und sein Losbrechmoment überwinden kann. Die Läufererregerwicklung ist dabei im Stillstand und im Betrieb an eine Gleichstromquelle angeschlossen.

Stromrichtermotoren für größere Leistungen werden insbesondere als Fördermaschinen eingesetzt. Bei Fördermaschinen besteht die Aufgabe, daß die Maschinen auch im Stillstand dauernd erregt bleiben, damit die Maschinen ohne Verzögerung für den Feldaufbau jederzeit anfahrbereit ist. Die ständige Zuführung des Erregerstromes auch bei Stillstand über die Bürsten und Schleifringe zur Erregerwicklung des Läufers kann aber bei elektrischen Stromrichtermotoren Schwierigkeiten bereiten, da die Bürsten dabei erhöhtem Verschleiß unterliegen.

Zur Lösung der Aufgabe speist gemäß der Erfindung bei einem Stromrichtermotor der eingangs beschriebenen Art der Umrichter bei Stillstand der Maschine zwei Stränge der Ständerwicklung mit Gleichstrom, während die Läufererregerwicklung von der Gleichstromquelle getrennt ist. Diese Gleichstromzuführung über die Ständerwicklung hält das Feld der Maschine in gleicher Weise aufrecht wie ein der Läuferwicklung zugeführter Gleichstrom, hat aber nicht den Nachteil der geschilderten Verschleißerscheinungen. Die Steuerung des Umrichters, derart, daß durch Leitendmachen einiger Umrichterelemente Gleichstrom vom Netz auf die beiden Stränge der Ständerwicklung geführt wird, bereitet keinerlei Schwierigkeit. Soll die Maschine angefahren werden, so wird in gewohnter Weise der Erregerstrom der Läufererregerwicklung zugeführt und in dieser hochgeregelt bzw. beim Abbremsen heruntergeregelt.

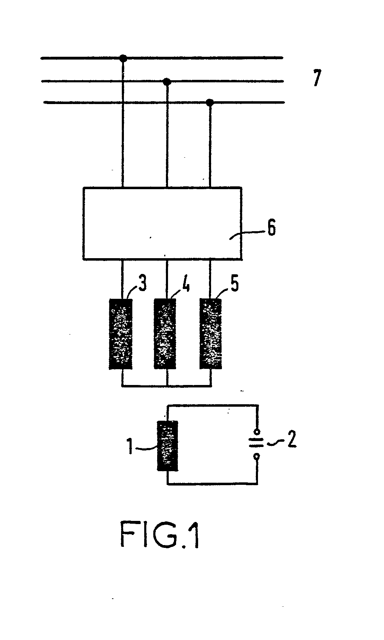

In der Figur der Zeichnung ist das Schaltbild eines Stromrichtermotors synchroner Bauart dargestellt. Die Synchronmaschine hat im Läufer die Läufererregerwicklung 1, die von einer Gleichstromquelle 2 gespeist ist. Die drei Stränge 3, 4 und 5 der Ständerwicklung sind untereinander in Stern geschaltet und über den Umrichter 6 mit dem Netz 7 verbunden.

Bei Stillstand der Synchronmaschine wird die Gleichstromzuführung zur Läufererregerwicklung 1 unterbrochen. Gleichzeitig werden die Stromrichterelemente des Umrichters 6 so gesteuert, daß ein Gleichstrom über zwei Stränge, z. B. die Stränge 4 und 5 der Ständerwicklung fließt. Dieser Gleichstrom hält das Feld der Synchronmaschine auch bei Stillstand aufrecht, so daß diese jederzeit ohne eine Verzögerung beim Feldaufbau durch Wiederzuleitung von Gleichstrom in die Läufererregerwicklung 1 angefahren werden kann.

## Patentanspruch

Elektrischer Stromrichtermotor synchroner Bauart, dessen drei Stränge (3, 4, 5) der Ständerwicklung über einen Umrichter (6) mit dem Netz (7) verbunden sind und dessen Läufererregerwicklung (1) bei laufendem Motor aus einer Gleichstromquelle (2) gespeist ist, dadurch gekennzeichnet, daß der Umrichter (6) bei Stillstand der Maschine zwei Stränge (4, 5) der Ständerwicklung mit Gleichstrom speist, während die Läufererregerwicklung (1) von der Gleichstromquelle (2) getrennt ist.

## Claim

Electrical commutator-fed synchronous motor, wherein three strands (3, 4, 5) of the stator winding are connected via a converter (6) to the mains (7) and whose rotor excitation winding (1) is fed from a d. c. source (2) when the motor is running, characterised in that when the machine is idle the converter (6) feeds two strands (4, 5) of the stator winding with d. c., the rotor excitation winding (1) then being separated from the d. c. source (2).

## Revendication

Moteur électrique à convertisseur de courant, du type de construction synchrone, dont les trois phases (3, 4, 5) de l'enroulement statorique sont reliées au réseau (7) par l'intermédiaire d'un convertisseur (6), et dont l'enroulement d'excitation rotorique (1) est alimenté, lorsque le moteur est en marche, à partir d'une source de courant continu (2), caractérisé par le fait qu'à l'arrêt du moteur le convertisseur (6) alimente deux phases (4, 5) de l'enroulement statorique en courant continu, alors que l'enroulement d'excitation rotorique (1) est isolé de la source de courant continu.

FIG.1